# EUROPEAN PATENT SPECIFICATION

(11) **EP 3 731 598 B1**
(45) Date of publication and mention of the grant of the patent: **08.09.2021**
(21) Application number: 20166681.5
(22) Date of filing: 30.03.2020
(51) Int. Cl.: H05B 7/00, B33Y 30/00, B29C 64/00, H05B 3/14, H05B 3/24, B22F 10/20, B22F 10/30, B22F 12/00, B33Y 10/00, B33Y 50/02

(54) **ADDITIVE MANUFACTURING APPARATUS AND MODIFICATION METHOD THEREFOR**
VORRICHTUNG ZUR GENERATIVEN FERTIGUNG UND MODIFIZIERUNGSVERFAHREN DAFÜR
APPAREIL DE FABRICATION ADDITIVE ET SON PROCÉDÉ DE MODIFICATION

(30) Priority: 26.04.2019 JP 2019084936
(43) Date of publication of application: 28.10.2020
(73) Proprietor: Mitsubishi Power, Ltd., Yokohama, Kanagawa 220-8401 (JP)
(72) Inventor: EGUCHI, Shigenobu, Yokohama, Kanagawa 220-8401 (JP); IMANO, Shinya, Yokohama, Kanagawa 220-8401 (JP)
(74) Representative: MERH-IP Matias Erny Reichl Hoffmann Patentanwälte PartG mbB

(56) References cited:
- JP-A- 2017 530 027
- US-A1- 2017 120 370
- US-A1- 2018 113 445
- US-A1- 2018 339 341
- US-A1- 2019 061 266

## Description

### BACKGROUND OF THE INVENTION

### 1. Field of the Invention

The present invention relates to an additive manufacturing apparatus that performs additive manufacturing by irradiating a metal material with an electron beam, and a modification method therefor.

### 2. Description of the Related Art

Additive manufacturing apparatuses that perform additive manufacturing by irradiating a metal material with an electron beam are known. An additive manufacturing apparatus in JP-2017-530027-T includes: a stage arranged in a vacuum chamber; a base plate arranged on the top side of the stage; a metal-material supply device that supplies a wire-like metal material onto the top side of the base plate; and an electron beam gun that irradiates, with an electron beam, the metal material supplied by the metal-material supply device, and melts and solidifies the metal material. Then, metal layers are shaped sequentially to manufacture a three-dimensionally shaped manufactured object on the base plate.

An additive manufacturing apparatus in JP-2017-165998-A includes: a temperature sensor provided at the interface between a base plate and a manufactured object; a resistance heating heater arranged under a stage; and a control unit that controls ON/OFF of a current to flow through the resistance heating heater on the basis of an output of the temperature sensor.

Although not described clearly, the additive manufacturing apparatus in JP-2017-165998-A requires a heater power supply for causing a current to flow through the resistance heating heater. However, the present inventors noticed that it becomes unnecessary to use a heater power supply if an electron beam emitted from an electron beam gun is used effectively.

The present invention is made in view of the matters described above, and an object thereof is to provide an additive manufacturing apparatus that makes it unnecessary to use a heater power supply, and makes it possible to attempt to reduce the cost, by effectively using an electron beam, and a modification method therefor.

### SUMMARY OF THE INVENTION

In order to achieve the object, a representative aspect of the present invention is an additive manufacturing apparatus including: a conductive stage arranged in a vacuum chamber; a conductive base plate arranged on a top side of the stage; a metal-material supply device that supplies a metal material onto a top side of the base plate; an electron beam gun that irradiates, with an electron beam, the metal material supplied by the metal-material supply device, and melts and solidifies the metal material; a grounding circuit that grounds the stage and the base plate; and/or a controller that controls the metal-material supply device and the electron beam gun. The additive manufacturing apparatus may further include a resistance heating element that is arranged between the stage and the base plate, and generates heat by a current produced by electron-beam emission from the electron beam gun.

According to the present invention, it is made unnecessary to use a heater power supply, and it is made possible to attempt to reduce the cost, by effectively using an electron beam.

### BRIEF DESCRIPTION OF THE DRAWINGS

FIG. 1 is a figure representing a schematic structure of an additive manufacturing apparatus in a first embodiment of the present invention; and
FIG. 2 is a figure representing a schematic structure of an additive manufacturing apparatus in a second embodiment of the present invention.

### DESCRIPTION OF THE PREFERRED EMBODIMENTS

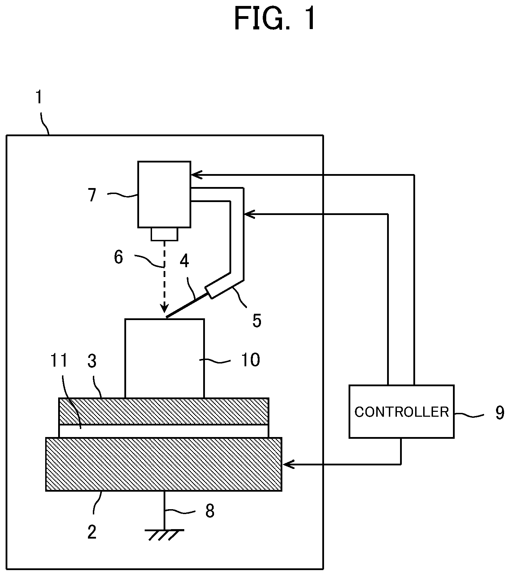

A first embodiment of the present invention is explained by using FIG. 1. FIG. 1 is a figure representing a schematic structure of an additive manufacturing apparatus in the present embodiment.

An additive manufacturing apparatus of the present embodiment includes: a conductive stage 2 arranged in a vacuum chamber 1; a conductive base plate 3 arranged on the top side of the stage 2; a metal-material supply device 5 that supplies a wire-like metal material 4 onto the top side of the base plate 3; an electron beam gun 7 that irradiates, with an electron beam 6, the metal material 4 supplied by the metal-material supply device 5, and melts and solidifies the metal material 4; a grounding circuit 8; and a controller 9.

The stage 2 is configured to be movable horizontally, and rotatable about a vertical axis. The grounding circuit 8 of the present embodiment includes a ground wire connected to the stage 2, and grounds the stage 2 and the base plate 3.

Although not illustrated, the electron beam gun 7 has a filament that generates the electron beam 6, and a focusing coil that focuses the electron beam 6. The electron beam gun 7 and the metal-material supply device 5 are coupled to each other such that an irradiation position of the electron beam 6 coincides with a supply position of the metal material 4. The electron beam gun 7 is configured to be movable horizontally and vertically, and rotatable about a horizontal axis, together with the metal-material supply device 5.

Although not illustrated, the controller 9 has a storage unit (specifically, for example, a memory, a hard disk, and the like) that stores a program and/or design data of a manufactured object, and a processor that executes a control process on the basis of the program and/or the design data of the manufactured object. The controller 9 controls a position and/or a rotation angle of the stage 2, and also controls a position and/or a rotation angle of the electron beam gun 7 and the metal-material supply device 5. In addition, the controller 9 controls ON/OFF of the emission of the electron beam 6 by the electron beam gun 7, and also controls ON/OFF of the supply of the metal material 4 by the metal-material supply device 5. Thereby, metal layers are shaped sequentially to manufacture a three-dimensionally shaped manufactured object 10 on the base plate 3.

After completion of the manufacture, the manufactured object 10 formed integrally with the base plate 3 is taken out from the vacuum chamber 1 to the outside. Note that, during the manufacture, the inner space of the vacuum chamber 1 is a high vacuum created by a vacuum pump (not illustrated). Thereby, mixing of impurities in the manufactured object 10 is prevented.

Meanwhile, in a case where a thickness of each layer of the manufactured object 10 is large, and a manufacture speed is high, and/or in a case where a high strength superalloy (specifically, for example, a high strength nickel-based alloy, a high strength cobalt-based alloy, or the like) is used as the metal material 4, a temperature of the manufactured object 10 is preferably kept high to prevent cracks of the manufactured object 10. In addition, a temperature gradient of the manufactured object 10 is preferably kept small. Explaining specifically, while a top portion of the manufactured object 10 is at a high temperature due to heat input with the electron beam 6 from the electron beam gun 7, a bottom portion of the manufactured object 10 is at a low temperature due to heat release through the base plate 3 and the stage 2. Accordingly, the bottom portion of the manufactured object 10 is preferably warmed.

In view of this, the additive manufacturing apparatus of the present embodiment includes a resistance heating element 11 (specifically, for example, one that is made of carbon, a ceramic or the like, has a resistance higher than those of the stage 2 and the base plate 3, and converts electricity into heat) that is arranged between the stage 2 and the base plate 3. Then, along with the emission of the electron beam 6 from the electron beam gun 7, electrons move through the manufactured object 10, the base plate 3, the resistance heating element 11, the stage 2, and the grounding circuit 8 in this order. With this movement of electrons (i.e., a current), the resistance heating element 11 generates heat, and can warm the base plate 3, and the bottom portion of the manufactured object 10. Thereby, the temperature of the manufactured object 10 can be kept high, and the temperature gradient of the manufactured object 10 can be kept small. Accordingly, cracks of the manufactured object 10 can be prevented. In addition, since the electron beam 6 is used effectively, it is made unnecessary to use a heater power supply for causing a current to flow through the resistance heating element 11, and it is made possible to attempt to reduce the cost.

Note that, when the additive manufacturing apparatus of the present embodiment is to be constructed, the entire apparatus may be constructed newly, but an existing additive manufacturing apparatus may be modified. That is, the resistance heating element 11 may be provided in an existing additive manufacturing apparatus. This modification can be made easily as compared to modifications in cases where heater power supplies are required.

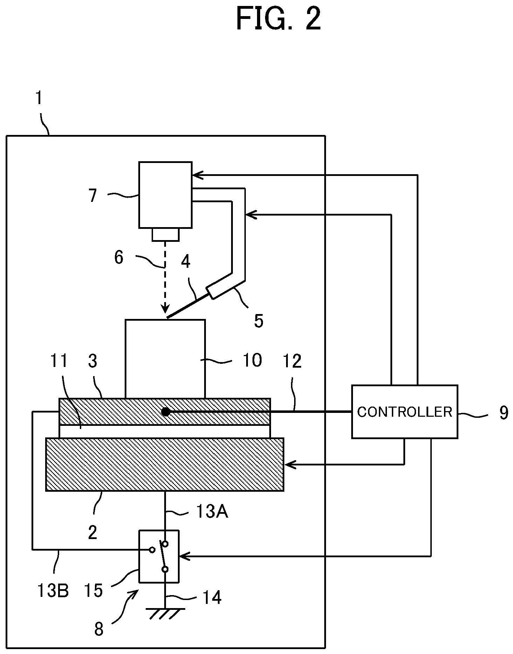

A second embodiment of the present invention is explained by using FIG. 2. FIG. 2 is a figure representing a schematic structure of an additive manufacturing apparatus in the present embodiment. Note that, in the present embodiment, portions that have counterparts in the first embodiment are given the same reference signs, and explanations thereof are omitted as appropriate.

The additive manufacturing apparatus of the present embodiment includes a temperature sensor 12 (specifically, for example, a thermocouple) that senses a temperature of the base plate 3 (in the figure, the temperature is an internal temperature of the base plate 3, but may be a surface temperature).

The grounding circuit 8 of the present embodiment includes a connection wire 13A connected to the stage 2, a connection wire 13B connected to the base plate 3, a ground wire 14, and a switch 15 that selects one of the connection wires 13A and 13B, and connects the selected one to the ground wire 14.

In addition to functions similar to those in the first embodiment, the controller 9 of the present embodiment has the function of controlling the switch 15 in accordance with the temperature of the base plate 3 sensed by the temperature sensor 12. Specifically, in a case where the temperature of the base plate 3 is lower than a preset predetermined value, the controller 9 controls the switch 15 such that the connection wire 13A and the ground wire 14 are connected. Thereby, a current flows through the manufactured object 10, the base plate 3, the resistance heating element 11, the stage 2, the connection wire 13A, and the ground wire 14, and the resistance heating element 11 generates heat. Accordingly, the base plate 3 and the bottom portion of the manufactured object 10 can be warmed.

On the other hand, in a case where the temperature of the base plate 3 sensed by the temperature sensor 12 is equal to or higher than the predetermined value, the controller 9 controls the switch 15 such that the connection wire 13B, and the ground wire 14 are connected. Thereby, a current flows through the manufactured object 10, the base plate 3, the connection wire 13B, and the ground wire 14. That is, a current does not flow through the resistance heating element 11, and the resistance heating element 11 does not generate heat.

In the present embodiment configured as described above also, similar to the first embodiment, it is made unnecessary to use a heater power supply, and it is made possible to attempt to reduce the cost, by effectively using the electron beam 6. In addition, in the present embodiment, the temperature of the base plate 3 can be adjusted.

Note that, when the additive manufacturing apparatus of the present embodiment is to be constructed, the entire apparatus may be constructed newly, but an existing additive manufacturing apparatus may be modified. Explaining specifically, the resistance heating element 11 and the temperature sensor 12 may be provided in an existing additive manufacturing apparatus. The grounding circuit 8 may include the connection wires 13A and 13B, the ground wire 14, and the switch 15. The function of controlling the switch 15 in accordance with the temperature of the base plate 3 sensed by the temperature sensor 12 may be added to the controller 9. This modification can be made easily as compared to modifications in cases where heater power supplies are required.

Note that, although not explained particularly in the first and second embodiments, before manufacture of the manufactured object 10, the controller 9 may perform control such that the base plate 3 is directly irradiated with the electron beam 6 from the electron beam gun 7, to preheat the base plate 3. In this case also, the resistance heating element 11 generates heat, thus the preheating temperature of the base plate 3 can be raised.

In addition, although in the examples explained in the first and second embodiments, the stage 2 is configured to be movable horizontally, and rotatable about a vertical axis, this is not the sole example. For example, the stage 2 may be configured to be unmovable and unrotatable. In this case, the controller 9 may not have the function of controlling the stage 2.

In addition, although in the examples explained in the first and second embodiments, the additive manufacturing apparatus includes the metal-material supply device 5 that supplies the wire-like metal material 4, this is not the sole example. The additive manufacturing apparatus may include a metal-material supply device that supplies a powdered metal material.

## Claims

1. An additive manufacturing apparatus comprising:
a conductive stage (2) arranged in a vacuum chamber (1) ;
a conductive base plate (3) arranged on a top side of the stage;
a metal-material supply device (5) that supplies a metal material (4) onto a top side of the base plate;
an electron beam gun (7) that irradiates, with an electron beam (6), the metal material supplied by the metal-material supply device, and melts and solidifies the metal material;
a grounding circuit (8) that grounds the stage and the base plate; and
a controller (9) that controls the metal-material supply device and the electron beam gun, **characterized in that**
the additive manufacturing apparatus includes a resistance heating element (11) that is arranged between the stage and the base plate, and generates heat by a current produced by electron-beam emission from the electron beam gun.

2. The additive manufacturing apparatus according to claim 1, further comprising:
a temperature sensor (12) that senses a temperature of the base plate, wherein
the grounding circuit includes
a first connection wire (13A) connected to the stage,
a second connection wire (13B) connected to the base plate,
a ground wire (14), and
a switch (15) that selects one of the first connection wire and the second connection wire, and connects the selected one to the ground wire, and
in a case where the temperature of the base plate sensed by the temperature sensor is lower than a preset predetermined value, the controller controls the switch such that the first connection wire and the ground wire are connected, and in a case where the temperature of the base plate sensed by the temperature sensor is equal to or higher than the predetermined value, the controller controls the switch such that the second connection wire and the ground wire are connected.

3. A method of modifying an additive manufacturing apparatus, the additive manufacturing apparatus including
a conductive stage (2) arranged in a vacuum chamber (1),
a conductive base plate (3) arranged on a top side of the stage,
a metal-material supply device (5) that supplies a wire-like or powdered metal material (4) onto a top side of the base plate,
an electron beam gun (7) that irradiates, with an electron beam (6), the metal material supplied by the metal-material supply device, and melts and solidifies the metal material,
a grounding circuit (8) that grounds the stage and the base plate, and
a controller (9) that controls the metal-material supply device and the electron beam gun, the modifying operation being **characterised by** providing
a resistance heating element (11) that generates heat by a current produced by electron-beam emission from the electron beam gun is provided between the stage and the base plate.

4. The method of modifying the additive manufacturing apparatus according to claim 3, wherein the modifying operation is further **characterised by**
a temperature sensor (12) that senses a temperature of the base plate is provided,
the grounding circuit includes
a first connection wire (13A) connected to the stage,
a second connection wire (13B) connected to the base plate,
a ground wire (14), and
a switch (15) that selects one of the first connection wire and the second connection wire, and connects the selected one to the ground wire, and
a function of controlling the switch such that the first connection wire and the ground wire are connected in a case where the temperature of the base plate sensed by the temperature sensor is lower than a preset predetermined value, and of controlling the switch such that the second connection wire and the ground wire are connected in a case where the temperature of the base plate sensed by the temperature sensor is equal to or higher than the predetermined value is added to the controller.

## Patentansprüche

1. Vorrichtung zum Herstellen eines Additivs, die Folgendes umfasst:
eine leitfähige Stufe (2), die in einer Unterdruckkammer (1) angeordnet ist;
eine leitfähige Grundplatte (3), die auf einer Oberseite der Stufe angeordnet ist;
eine Metallmaterial-Zuführeinrichtung (5), die ein Metallmaterial (4) auf eine Oberseite der Grundplatte zuführt;
eine Elektronenstrahlkanone (7), die das Metallmaterial, das durch die Metallmaterial-Zuführeinrichtung zugeführt wird, mit einem Elektronenstrahl (6) bestrahlt und das Metallmaterial schmilzt und verfestigt;
eine Erdungsschaltung (8), die die Stufe und die Grundplatte mit Masse verbindet; und
eine Steuereinheit (9), die die Metallmaterial-Zuführeinrichtung und die Elektronenstrahlkanone steuert, **dadurch gekennzeichnet, dass**
die Vorrichtung zum Herstellen eines Additivs ein Widerstandsheizelement (11) enthält, das zwischen der Stufe und der Grundplatte angeordnet ist und durch einen Strom, der durch eine Elektronenstrahlemission von der Elektronenstrahlkanone erzeugt wird, Wärme erzeugt.

2. Vorrichtung zum Herstellen eines Additivs nach Anspruch 1, die ferner Folgendes umfasst:
einen Temperatursensor (12), der eine Temperatur der Grundplatte erfasst, wobei
die Erdungsschaltung Folgendes enthält:
eine erste Verbindungsleitung (13A), die mit der Stufe verbunden ist,
eine zweite Verbindungsleitung (13B), die mit der Grundplatte verbunden ist,
eine Masseleitung (14), und
einen Schalter (15), der entweder die erste Verbindungsleitung oder die zweite Verbindungsleitung auswählt und die ausgewählte Leitung mit der Masseleitung verbindet, und
dann, wenn die Temperatur der Grundplatte, die durch den Temperatursensor erfasst wird, niedriger als ein im Voraus eingestellter, vorgegebener Wert ist, die Steuereinheit den Schalter derart steuert, dass die erste Verbindungsleitung und die Masseleitung verbunden sind, und dann, wenn die Temperatur der Grundplatte, die durch den Temperatursensor erfasst wird, größer oder gleich dem vorgegebenen Wert ist, die Steuereinheit den Schalter derart steuert, dass die zweite Verbindungsleitung und die Masseleitung verbunden sind.

3. Verfahren zum Verändern einer Vorrichtung zum Herstellen eines Additivs, wobei die Vorrichtung zum Herstellen eines Additivs Folgendes enthält:
eine leitfähige Stufe (2), die in einer Unterdruckkammer (1) angeordnet ist,
eine leitfähige Grundplatte (3), die auf einer Oberseite der Stufe angeordnet ist,
eine Metallmaterial-Zuführeinrichtung (5), die ein drahtartiges oder pulverisiertes Metallmaterial (4) einer Oberseite der Grundplatte zuführt,
eine Elektronenstrahlkanone (7), die das Metallmaterial, das durch die Metallmaterial-Zuführeinrichtung zugeführt wird, mit einem Elektronenstrahl (6) bestrahlt und das Metallmaterial schmilzt und verfestigt,
eine Erdungsschaltung (8), die die Stufe und die Grundplatte mit Masse verbindet, und
eine Steuereinheit (9), die die Metallmaterial-Zuführeinrichtung und die Elektronenstrahlkanone steuert,
wobei der Veränderungsvorgang **gekennzeichnet ist durch** das Bereitstellen eines Widerstandsheizelements (11), das durch einen Strom, der durch eine Elektronenstrahlemission von der Elektronenstrahlkanone erzeugt wird, Wärme erzeugt, zwischen der Stufe und der Grundplatte.

4. Verfahren zum Verändern einer Vorrichtung zum Herstellen eines Additivs nach Anspruch 3, wobei der Veränderungsvorgang ferner **dadurch gekennzeichnet ist, dass**
ein Temperatursensor (12), der eine Temperatur der Grundplatte erfasst, vorgesehen ist,
die Erdungsschaltung Folgendes enthält:
eine erste Verbindungsleitung (13A), die mit der Stufe verbunden ist,
eine zweite Verbindungsleitung (13B), die mit der Grundplatte verbunden ist,
eine Masseleitung (14), und
einen Schalter (15), der entweder die erste Verbindungsleitung oder die zweite Verbindungsleitung auswählt und die ausgewählte Leitung mit der Masseleitung verbindet, und
zu der Steuereinheit eine Funktion des Steuerns des Schalters, derart, dass die erste Verbindungsleitung und die Masseleitung verbunden werden, wenn die Temperatur der Grundplatte, die durch den Temperatursensor erfasst wird, niedriger als eine im Voraus eingestellte, vorgegebene Temperatur ist, und des Steuers des Schalters, derart, dass die zweite Verbindungsleitung und die Masseleitung verbunden werden, wenn die Temperatur der Grundplatte, die durch den Temperatursensor erfasst wird, größer oder gleich dem vorgegebenen Wert ist, hinzugefügt wird.

## Revendications

1. Appareil de fabrication additive comprenant :
un étage conducteur (2) agencé dans une chambre sous vide (1) ;
une plaque de base conductrice (3) agencée sur un côté supérieur de l'étage ;
un dispositif d'alimentation de matériau métallique (5) qui alimente un matériau métallique (4) jusque sur un côté supérieur de la plaque de base ;
un pistolet à faisceau d'électrons (7) qui irradie, avec un faisceau d'électrons (6), le matériau métallique alimenté par le dispositif d'alimentation de matériau métallique, et qui fait fondre et se solidifier le matériau métallique ;
un circuit de mise à la terre (8) qui met à la terre l'étage et la plaque de base ; et
un contrôleur (9) qui commande le dispositif d'alimentation de matériau métallique et le pistolet à faisceau d'électrons, **caractérisé en ce que** l'appareil de fabrication additive inclut un élément de chauffage par résistance (11) qui est agencé entre l'étage et la plaque de base, et qui génère de la chaleur via un courant produit par une émission du faisceau d'électrons provenant du pistolet à faisceau d'électrons.

2. Appareil de fabrication additive selon la revendication 1,
comprenant en outre :
un capteur de température (12) qui détecte une température de la plaque de base, dans lequel
le circuit de mise à la terre inclut
un premier fil de connexion (13A) connecté à l'étage,
un second fil de connexion (13B) connecté à la plaque de base,
un fil de mise à la terre (14), et
un commutateur (15) qui sélectionne un fil parmi le premier fil de connexion et le second fil de connexion, et qui connecte le fil sélectionné au fil de mise à la terre, et
dans un cas où la température de la plaque de base détectée par le capteur de température est inférieure à une valeur prédéterminée prédéfinie, le contrôleur commande le commutateur de sorte que le premier fil de connexion et le fil de mise à la terre sont connectés, et dans un cas où la température de la plaque de base détectée par le capteur de température est égale ou supérieure à la valeur prédéterminée, le contrôleur commande le commutateur de sorte que le second fil de connexion et le fil de mise à la terre sont connectés.

3. Procédé pour modifier un appareil de fabrication additive, l'appareil de fabrication additive incluant :
un étage conducteur (2) agencé dans une chambre sous vide (1),
une plaque de base conductrice (3) agencée sur un côté supérieur de l'étage,
un dispositif d'alimentation de matériau métallique (5) qui alimente un matériau métallique (4) sous forme de poudre ou de fil jusque sur un côté supérieur de la plaque de base,
un pistolet à faisceau d'électrons (7) qui irradie, avec un faisceau d'électrons (6), le matériau métallique alimenté par le dispositif d'alimentation de matériau métallique, et qui fait fondre et se solidifier le matériau métallique ;
un circuit de mise à la terre (8) qui met à la terre l'étage et la plaque de base ; et
un contrôleur (9) qui commande le dispositif d'alimentation de matériau métallique et le pistolet à faisceau d'électrons,
l'opération de modification étant **caractérisée en ce qu'**il est prévu entre l'étage et la plaque de base un élément de chauffage à résistance (11) qui génère de la chaleur via un courant produit par une émission du faisceau d'électrons provenant du pistolet à faisceau d'électrons.

4. Procédé pour modifier l'appareil de fabrication additive selon la revendication 3, dans lequel l'opération de modification est en outre **caractérisée en ce que** :
il est prévu un capteur de température (12) qui détecte une température de la plaque de base,
le circuit de mise à la terre inclut
un premier fil de connexion (13A) connecté à l'étage,
un second fil de connexion (13B) connecté à la plaque de base,
un fil de mise à la terre (14), et
un commutateur (15) qui sélectionne un fil parmi le premier fil de connexion et le second fil de connexion, et qui connecte le fil sélectionné au fil de mise à la terre, et
une fonction consistant à commander le commutateur de sorte que le premier fil de connexion et le fil de mise à la terre sont connectés, dans un cas où la température de la plaque de base détectée par le capteur de température est inférieure à une valeur prédéterminée prédéfinie, et à commander le commutateur de sorte que le second fil de connexion et le fil de mise à la terre sont connectés, dans un cas où la température de la plaque de base détectée par le capteur de température est égale ou supérieure à la valeur prédéterminée, est ajoutée au contrôleur.
